# EUROPEAN PATENT SPECIFICATION

(11) **EP 3 740 934 B1**
(45) Date of publication and mention of the grant of the patent: **30.11.2022**
(21) Application number: 19701184.4
(22) Date of filing: 17.01.2019
(51) Int. Cl.: G06T 7/00, G06T 7/10

(54) **SPECTRAL MATCHING FOR ASSESSING IMAGE SEGMENTATION**
SPEKTRALABGLEICH ZUR BEURTEILUNG VON BILDSEGMENTIERUNG
CONCORDANCE SPECTRALE POUR ÉVALUER UNE SEGMENTATION D'IMAGES

(30) Priority: 18.01.2018 EP 18152312
(43) Date of publication of application: 25.11.2020
(73) Proprietor: Koninklijke Philips N.V., 5656 AG Eindhoven (NL)
(72) Inventor: ORASANU, Eliza, Teodora, 5656 AE Eindhoven (NL); BUERGER, Christian, 5656 AE Eindhoven (NL); RENISCH, Steffen, 5656 AE Eindhoven (NL)
(74) Representative: Philips Intellectual Property & Standards
(86) International application number: PCT/EP2019/051121
(87) International publication number: WO 2019/141763

(56) References cited:
- LOMBAERT HERVE ET AL: "Fast Brain Matching with Spectral Correspondence", 3 July 2011 (2011-07-03), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 660 - 673, XP047433964, ISSN: 0302-9743 ISBN: 978-3-642-14979-5 abstract; figures 2, 4, 5 "Method", "Results", "Matching Deformed Brain Surfaces"; page 662 - page 668
- Lars Magnus Valnes: "Extraction of Mesh from FreeSurfer", , 4 March 2016 (2016-03-04), XP055463653, Retrieved from the Internet: URL:http://folk.uio.no/karleh/biomechanics /Freesurfer.pdf [retrieved on 2018-03-28]
- Anonymous: "FreeSurferMethodsCitation - Free Surfer Wiki", , 8 June 2016 (2016-06-08), XP055463681, Retrieved from the Internet: URL:http://surfer.nmr.mgh.harvard.edu/fswi ki/FreeSurferMethodsCitation [retrieved on 2018-03-28]
- HERVE LOMBAERT ET AL: "Groupwise Spectral Log-Demons Framework for Atlas Construction", 5 October 2012 (2012-10-05), MEDICAL COMPUTER VISION. RECOGNITION TECHNIQUES AND APPLICATIONS IN MEDICAL IMAGING, SPRINGER BERLIN HEIDELBERG, BERLIN, HEIDELBERG, PAGE(S) 11 - 19, XP047026331, ISBN: 978-3-642-36619-2 abstract; figure 2 page 12 - page 16
- ULI MEZGER ET AL: "Navigation in surgery", LANGENBECK'S ARCHIVES OF SURGERY, vol. 398, no. 4, 22 February 2013 (2013-02-22), pages 501-514, XP055463936, DE ISSN: 1435-2443, DOI: 10.1007/s00423-013-1059-4

## Description

### FIELD OF THE INVENTION

The invention relates to processing medical image data, in particular it relates to methods and apparatuses for segmenting medical image data.

### BACKGROUND OF THE INVENTION

Image segmentation refers to the process of partitioning a digital image into multiple segments, e.g. sets of pixels or voxels, in order to identify one or more segments which are more meaningful and easier to analyze. Image segmentation is typically used to locate objects and boundaries, like lines, curves, etc., in images. For example, medical images, such as magnetic resonance images, are segmented in order to identify anatomical structures of interest which are to be analyzed.

Accurate automatic segmentation of structures of interest, like e.g. organs, is an important task in image analysis. In particular, in medical imaging an accurate and reliable segmentation could be highly important, since the segmentation may be used to define target areas for surgery or radiation treatment. There are different approaches for automatic segmentation of structures of interest: Segmentation may either be performed voxel-based, i.e. voxel-by-voxel, an approach which has a tendency to leak into adjacent anatomical structures, or model-based which has a risk of failing in case of an abnormal anatomical structure, like e.g. a resection.

Lombaert Herve et. Al., "Fast Brain Matching with Spectral Correspondence", 3 July 2011, ECCV 2016 Conference; Lecture Notes in Computer Science, Springer International Publishing, pp. 660 - 673, discloses an approach for fast brain matching based on spectral correspondence where spectra of graphs derived from surface model meshes are matched for fast cerebral cortex matching computation, with reference to the use of spectral methods in computer vision for segmentation and registration.

### SUMMARY OF THE INVENTION

The invention provides for a medical image data processing system for image segmentation, a method of operating the medical image data processing system, and a computer program product in the independent claims. Embodiments are given in the dependent claims.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, a data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the processor of a computer system to interact with and/or control an external computing device and/or apparatus. A hardware interface may allow a processor to send control signals or instructions to an external computing device and/or apparatus. A hardware interface may also enable a processor to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

Magnetic Resonance Imaging (MRI) data, also referred to as Magnetic Resonance (MR) data or magnetic resonance image data, is defined herein as being the recorded measurements of radio frequency signals emitted by nuclear spins using the antenna of a magnetic resonance apparatus during a magnetic resonance imaging scan. Magnetic resonance image data is an example of medical image data. A Magnetic Resonance Imaging (MRI) image or MR image is defined herein as being the reconstructed two or three-dimensional visualization of anatomic data comprised by the magnetic resonance imaging data, i.e. MRI images are provided by MRI data sets comprising a representative selection MRI data. This visualization can be performed using a computer. Magnetic resonance imaging data may be provided using a representation of the respective data in k-space or image space. Using a Fourier transformation, the magnetic resonance imaging data may be transformed from k-space to image space or vice versa. In the following, magnetic resonance image data may comprise a selection of MRI data in image space representative of a two or three-dimensional anatomic structure, i.e. an MRI image.

An 'anatomical structure' is any structure of the anatomy of a subject, like for example a person or an animal. A structure may comprise a certain organ like the liver or the brain, or a part of the same or it may comprise a certain anatomical area like the spine area, a knee, a shoulder etc.

'Segmentation' refers to the partitioning of a digital image data into multiple segments, e.g. sets of pixels or voxels, in order to identify one or more segments, which represent structures of interest which may be further analyzed. Segmentation may be used to identify and locate structures, in particular their boundaries in the image data. For example, lines, curves, planes, surfaces etc. may be identified. Labels may be assigned to each pixel or voxel in an image such that pixels/voxels with the same label share certain characteristics and may be highlighted in order to indicate contours, areas or volumes of the structures of interest. When applied to three-dimensional image data, e.g. a stack of two-dimensional images, the resulting contours after image segmentation may be used to create three dimensional reconstructions of shapes of structures of interest, like e.g. anatomical structures, with the help of interpolation algorithms such as marching cubes. Three-dimensional contours may e.g. be provided by a surface mesh. The mesh may comprise a plurality of flat, two-dimensional polygons, like e.g. triangles.

The image segmentation may for instance be performed using standard techniques such as a voxel-by-voxel segmentation using image processing for looking at abrupt changes in the intensity values of voxels to determine the image segmentation.

'Spectral matching' refers to the method of registering/matching different shapes to investigate topological shape differences between them and it is based on spectral graph theory. Spectral graph theory offers a fast approach for surface and image registration by matching shapes or images in the spectral domain, where two near-isometric shapes, with similar geodesic distances between points, have similar spectral representations. Spectral graph theory is e.g. described in Herve Lombaert et al.: "FOCUSR: Feature Oriented Correspondence using Spectral Regularization - A Method for Accurate Surface Matching", in IEEETransactions on Pattern Analysis and Machine Intelligence, (99):1-18, 2012, or Yonggang Shi at al. "Metric optimization for surface analysis in the Laplace-Beltrami embedding space" in IEEE Transactions on Medical Imaging, 33(7):1447-1463, 2014. Spectral graph theory uses the eigenvalues and eigenvectors obtained after the decomposition of the graph Laplacian matrix corresponding to a predefined graph of the surface/image, i.e. where the nodes of the graph can be either voxel in an image or vertices in a surface mesh. These eigenvalues can be interpreted as natural oscillating frequencies of a physical shape. The eigenvectors, each associated with one eigenvalue, represent normal modes of the shape or eigenmodes. A surface can then be matched in the spectral domain by matching its spectral coordinates or eigenmodes.

Graphs are mathematical structures used to model relations between objects consisting of vertices or nodes connected by edges and may be represented by matrices. Spectral graph theory considers properties of graphs with respect to the properties of their associated matrices. Graph theory intends to compute principal properties and structures of a graph from its spectrum making use of a spectral decomposition of the respective graph. The eigenvalues obtained after the decomposition, referred to as spectra, link one extremal graph property to another and are closely related to most of the major invariants of a graph. Thus, eigenvalues provide crucial insight for an understanding graphs.

A connected graph G = {V, E} may be defined by nodes V = (x₁, ..., x_{N}) and edges/connections E between the respective nodes. An adjacency matrix W is the N x N matrix representation of a weighted graph, where N is the number of nodes in the graph. The weighted graph describes the local similarities of nodes Sim(xᵢ, xⱼ). For each pair of nodes xᵢ and xⱼ, i ≠ j, the entry wᵢⱼ of the adjacency matrix W may be estimated based on the node affinity defined by a similarity metrics of the two nodes Sim(xᵢ, xⱼ): wᵢⱼ = 1/Sim(xᵢ, xⱼ) if the nodes i and j are connected and 0 otherwise. A degree matrix D is the diagonal matrix whose entries Dᵢᵢ are the sum of the weights of the graph edges associated with a voxel xᵢ: Dᵢᵢ=Σⱼ Wᵢⱼ. G is a diagonal node weight matrix and, in most cases, may be set to G = D. A graph Laplacian matrix L associated with the connected graph G = {V, E} may be constructed. For example, the general or Random Walk graph Laplacian is computed as L = G⁻¹(D-W). A more general and common form is the symmetric normalized Laplacian given by L = D^{-1/2}(D-W) D^{-1/2}. More details on the graph Laplacian and its properties are e.g. provided in Fan R K Chung: "Spectral Graph Theory", AMS & CBMS, 1997.

The general graph Laplacian is a symmetric and positive definite matrix. Hence, its properties can be analyzed after eigen-decomposition resulting in a graph spectrum L = UΛU⁻¹. It is identified by the eigenvalues A = (λ₀, λ₁, ..., λ_{N}) and by their associated spectral components U = (U₀, U₁, ..., Uₖ). The eigenvectors, also referred to as spectral components, represent frequencies of vibration and provide information on the overall graph properties. The spectral components (U₀, U₁, ..., Uₖ) represent the fundamental modes of vibrations and describe the increasing complexity of the geometric features of the graph from coarse to fine scales. Hence, the eigenvectors corresponding to the higher eigenvalues, the higher modes, provide more information at a finer scale. Each eigenvector Uᵢ is a column matrix with N values, where N is the number of nodes. Each eigenvector represents a different weighted harmonic on the graph, which corresponds to the inherent property of the graph's geometry. Thus, the eigenvalues provide the global shape properties of the graph.

An example of a spectral decomposition comprises defining a weighted adjacency matrix, computing a diagonal degree matrix by adding all values column-wise, computing a graph Laplacian and decomposing the graph Laplacian to obtain its eigenvectors and eigenvalues.

In medical imaging, an image or shape may be seen as a discrete set of measures at each voxel the image or vertex of the mesh. A connected graph G = {V, E} can be constructed which is associated with the image or shape and which comprises nodes of the graph V = (x₁, ..., x_{N}) representing voxels in the image or vertices in a surface mesh. The edges/connections between nodes E represent the relationship between the voxels or vertices expressed by local similarity.

The similarity or affinity of the nodes Sim(xᵢ, xⱼ) is usually subjective to the application and purpose of spectral embeddings, and may e.g. be given by the Euclidean distance between the connected nodes, e.g. in cases of shapes where the nodes are vertices of a triangular mesh. In cases of images with the nodes representing image voxels, the similarity may e.g. be based upon both Euclidean distance and difference of the image intensity. Thus, spectral components may be used in the field of medical imaging to describe the shape variation, or different surfaces and structures from the image.

In one aspect, the invention relates to a medical image data processing system for image segmentation. The medical image data processing system comprises a memory storing machine executable instructions and a reference surface mesh representation of an anatomical reference structure and a processor for controlling the medical image data processing system. An execution of the machine executable instructions by the processor causes the processor to control the medical image data processing system to receive medical image data. A segmentation of an anatomical structure of interest comprised by the medical image data is generated. The segmentation is converted to a surface mesh representation of the anatomical structure of interest. The resulting surface mesh representation is compared with the reference surface mesh representation of the anatomical reference structure matching one or more spectral embeddings of the two meshes, i.e. using a mesh correspondence resulting from a spectral matching of the two meshes, and an area of topological mismatch (i.e. an area of topological differences) of the surface mesh representation with the reference surface mesh representation is provided.

Segmentation plays a key role in identifying structures of interest, like e.g. anatomical structures, in medical image data. Embodiments may have the beneficial of improving and/or ensuring the quality of segmentations. High quality segmentations of medical image data may e.g. be beneficial for diagnostic analysis, radiotherapy planning, and surgery planning. Spectral graph theory may offer a fast solution for matching surface meshes with different topologies in the spectral domain.

There are many organ segmentation approaches which work on a voxel-by-voxel basis (VBS) by inspecting the local neighborhood of a voxel, like e.g. region growing, front propagation, level sets etc., but also classification methods like decision forests or neural networks. However, these voxel-base approaches are often prone to segmentation errors due to imaging artifacts.

Another popular segmentation technique which is commonly used by are model-based segmentations (MBS). With this technique a triangulated surface mesh representing the organ boundary is adapted to the medical image in a controlled way so that the general shape of an anatomical structure of interest, like an organ, is preserved. Thus, the segmentation is regularized using prior anatomical knowledge, which makes the technique robust against various types of imaging artifacts.

However, with MBS it is difficult to accurately segment organs with abnormal shapes, like e.g. if part of the structure is missing due to prior surgery. In this case, a voxel-by-voxel segmentation might yield a more appropriate segmentation of the structure.

Embodiments may have the beneficial effect of combining the advantages of both methods, i.e. VBS and MBS, as well as enabling an automatic detection of whether a given anatomical structure of interest shows anatomical abnormalities.

Embodiments may enable an accurate automatic segmentation of structures of interest, like e.g. organs. Accurate automatic segmentation of anatomical structures of interest is an important task in medical imaging in order to accelerate and objective the processing and evaluation of imaging results. Furthermore, accuracy may be increased.

Embodiments may thus help to identify potential regions, where the segmentation algorithm applied did not perform as expected. Embodiments may further have the beneficial effect of enabling a detection of topological shape variations e.g. if a patient's anatomy differs from reference patient cohort.

Conversion of the segmentation from voxel-based to shape-based may e.g. be performed using a triangulation method like marching cubes.

The received medical image data is three-dimensional medical image data and the segmentation is a volumetric voxel-by-voxel-segmentation.

According to embodiments, the areas of topological mismatch of the surface mesh representation with the reference surface mesh representation are identified. Thus, spectral matching is used in order to determine topological shape differences of the surface mesh representations and thus of the underlying anatomical structure of interest as well as the anatomical reference structure. A mesh correspondence after spectral matching is able to identify patches of the surface segmentation mesh, i.e. structural sections, where the mesh's topology does not match the topology of a reference structure, i.e. reference model.

The providing of the area of topological mismatch comprises at least one of the following: identifying a missing structural section of the surface mesh representation with respect to the reference surface mesh representation and identifying an additional structural section of the surface mesh representation with respect to the reference surface mesh representation.

Voxel-based segmentations often tend to pick up pieces not belonging to the anatomical structure of interest, e.g. some extra tissue may be picked up. For example, in case of segmenting a bladder using voxel-wise segmentation errors like a leaking of segmentation into the abdominal space may occur. Such abnormal sections and/or areas in regard of the anatomical structure of interest may be detected after spectral matching and may subsequently be analyzed further to assess whether they should actually be included in the segmentation. Thus, spectral matching may provide quality metrics of a segmentation.

According to embodiments, the execution of the machine executable instructions further causes the processor to determine a quality metric of the segmentation based on the comparison. Embodiments may be used for performing a sanity check on medical image data segmentation using the quality metric in order to determine and/or assure the quality of segmentations performed. The quality metric may quantify the degree of differences between surface mesh representation and the reference surface mesh representation. For example, the segmentation is accepted as being suitable in case the quality metric is below or above a predefined threshold. Embodiments may be particularly useful in the context of MR based dose planning approaches for external beam radiation therapy, where incision holes and tissue resections need to be identified and handled appropriately.

According to embodiments, the receiving of the medical image data comprises: sending a request for the respective medical image data to a database comprising the medical image data, wherein in response to the request the requested medical image data is received from the database. The database may be a local or a remote database. For example, the database may be accessible over a network, the database may be comprised by a storage of the medical image data processing system or it may be stored on a portable storage device.

According to embodiments, the medical image data comprises at least one of the following: magnetic resonance image data, pseudo computer tomography image data and computer tomography image data.

According to embodiments spectral matching may provide the comparison a triangulated surface mesh representation of a volumetric segmentation of an anatomical structure of interest, like a target organ, with a similar mesh representation of an anatomical reference structure of interest, like a reference organ model, e.g. an exemplary healthy organ. Embodiments may allow to detect and localize shape abnormalities of a patient's anatomy.

Embodiments for example be applied in the field of oncology, e.g. for bladders that leak, kidneys with tumors, liver and heart confusion in non-contrasted CT images, MRI images or pseudo-CT images. Relevant application for radiotherapy may e.g. be an identification of a hole in a human skull that underwent surgery.

Accurate segmentation of anatomical structures of interest is of importance in medical imaging, for instance for the extraction of certain biomarkers, like e.g. organ sizes, but also for treatment planning such as radiation treatment or surgery planning. On the one hand, it is important to ensure that correct anatomical structure is defined as a target structure for the treatment or as an organ-at-risk that needs to be avoided or receive minimal radiation during treatment. Furthermore, it is important that e.g. the correct radiation dose in applied. The radiation dose in a target alter depending on whether an incision hole or bone is located in the beam path. Therefore, a reliable identification of such holes may be important.

Pseudo Computer Tomography (CT) images, also referred to as synthetic or virtual CT images, are simulated CT images calculated using data from one or more other medical imaging modalities. Pseudo-CT images may e.g. be calculated from MRI data. For example a tissue classification may be applied to each of the regions using a magnetic resonance imaging tissue classifier. The magnetic resonance imaging tissue classifier may use standard techniques. For example, the magnetic resonance imaging tissue classifier may work by determining an average or a mean value of the voxels within a particular region. These may be normalized or scaled and then compared to a standard to identify a tissue type and assign a tissue classification. The classification may be supported by a segmentation of the underlying MRI image, in particular by a segmentation according to one of the embodiments above.

Furthermore, a Hounsfield unit map may be calculated for the MRI image by assigning a Hounsfield unit value to each of the voxels according to the tissue classification. The Hounsfield mapping comprises a mapping between the tissue classifications to Hounsfield units. Using the Hounsfield unit mapping, a pseudo-CT image may be generated.

Considering, e.g. MR-only radiotherapy treatment planning, pseudo-CT generation, which implies an estimation of Hounsfield Units (HU) from MR images, is a crucial part for establishing a similar image to a CT. The Hounsfield unit (HU) scale provides a quantitative scale for describing radiodensity in form of a linear transformation of the original linear attenuation coefficient measurement into one in which the radiodensity of distilled water at standard pressure and temperature (STP) is defined as zero HU, while the radiodensity of air at STP is defined as -1000 HU. Model-based segmentation of bones and soft tissue structures from MR images may be used to accurately estimate soft and hard tissue HU values. However, in post-operative surgery cases, e.g. in brain tumor resection cases, incision holes may be present in the skull. These incision holes need a soft tissue HU assignment in the pseudo-CT image, which is difficult to achieve by using a model-based segmentation alone. Embodiments may allow to use spectral matching of pre-/post-interventional patient meshes to accurately determine the location of incision holes. The holes determined may then be handled in an extra step in the generation of pseudo-CT images.

According to embodiments, segmentation quality may be assessed using matching of a meshed voxel-wise segmentation result of an anatomical structure of interest to a predefined reference model of the anatomical structure of interest. Embodiments may thus help to identify potential regions, where the segmentation algorithm applied did not perform as expected.

Embodiments may have the beneficial effect of enabling a detection of topological shape variations e.g. if a patient's anatomy differs from another patient cohort, for example in the case of brain resection.

According to embodiments, the medical image data processing system further comprises a magnetic resonance imaging system. The magnetic resonance imaging system further comprises a main magnet for generating a main magnetic field within an imaging zone, a magnetic field gradient system for generating a spatially dependent gradient magnetic field within the imaging zone, and a radio-frequency antenna system configured for acquiring magnetic resonance data from the imaging zone. The memory further stores pulse sequence commands. The pulse sequence commands are configured for controlling the magnetic resonance imaging system to acquire the magnetic resonance data from the imaging zone. The receiving of the medical image data comprises the execution of the machine executable instructions using the pulse sequence commands and acquire the medical image data in form of magnetic resonance image data from the imaging zone by the radio-frequency antenna system.

According to embodiments, the comparing comprises identifying at least one of the following: an incision hole and a tissue resection comprised by the anatomical structure of interest. Embodiments may allow to e.g. detect the location of tissue resections, incision holes after interventional procedures, or additional tissue that appears similar as the organ itself. For example, locations of tissue resections, incision holes after interventional procedures, or additional tissue that appears similar to the organ itself may be detected. Furthermore, a potential false segmentation such as a leakage into an adjacent anatomical structure due to imaging artifacts may be identified and/or avoided. These areas may be investigated further locally in a subsequent step. Embodiments may have the beneficial effect that no direct one-to-one vertex correspondence is required between meshes to be compared, due to the conversion into the spectral space. Thus, even deviation, like incision holes in bones, may be detected.

According to embodiments, the anatomical reference structure is an exemplary anatomical structure and the execution of the machine executable instructions further causes the processor to generate the reference surface mesh representation stored in the memory. The generating comprises receiving reference medical image data of the exemplary anatomical structure. A segmentation of the exemplary anatomical structure is generated. The segmentation is converted to the reference surface mesh representation of the exemplary anatomical structure.

According to embodiments, the received reference medical image data is comprised by a plurality of sets of medical reference image data of a plurality of exemplary anatomical structures which are received. A segmentation is generated for each of the sets of medical reference image data. The resulting segmentations are converted to exemplary surface mesh representations of the exemplary anatomical structures and the reference surface mesh representation is generated averaging over the exemplary surface mesh representations. Embodiments may have the beneficial effect that taking into account a plurality of exemplary anatomical structures e.g. of a reference patient cohort, a reference surface mesh representation may be provided which depends less on individual anatomical variations.

In another aspect, the invention relates to a method for image segmentation using a medical image data processing system. The medical image data processing system comprises a memory storing machine executable instructions and reference surface mesh representation of an anatomical reference structure and a processor for controlling the medical image data processing system. An execution of the machine executable instructions by the processor causes the processor to control the medical image data processing system to execute the method comprising receiving medical image data. A segmentation of an anatomical structure of interest comprised by the medical image data is generated. The segmentation is converted to a surface mesh representation of the anatomical structure of interest. The resulting surface mesh representation is compared with the reference surface mesh representation of the anatomical reference structure matching one or more spectral embeddings of the two meshes, i.e. using a mesh correspondence resulting from a spectral matching of the two meshes, and an area of topological mismatch of the surface mesh representation with the reference surface mesh representation is provided.

In another aspect, the invention relates to a computer program product for image segmentation comprising machine executable instructions for execution by a processor controlling a medical image data processing system. The medical image data processing system comprises a processor for controlling the medical image data processing system. An execution of the machine executable instructions by the processor causes the processor to control the medical image data processing system to receive medical image data. A segmentation of an anatomical structure of interest comprised by the medical image data is generated. The segmentation is converted to a surface mesh representation of the anatomical structure of interest. The resulting surface mesh representation is compared with the reference surface mesh representation of the anatomical reference structure matching one or more spectral embeddings of the two meshes, i.e. using a mesh correspondence resulting from a spectral matching of the two meshes, and an area of topological mismatch of the surface mesh representation with the reference surface mesh representation is provided.

It is understood that one or more of the aforementioned embodiments of the invention may be combined as long as the combined embodiments are not mutually exclusive.

### BRIEF DESCRIPTION OF THE DRAWINGS

In the following preferred embodiments of the invention will be described, by way of example only, and with reference to the drawings in which:
Fig. 1 illustrates an example of a medical image data processing system,
Fig. 2 illustrates an example of a magnetic resonance imaging system;
Fig. 3 illustrates an example of a method of operating the medical image data processing system;
Fig. 4 illustrates an example of a method of operating the magnetic resonance imaging system;
Fig. 5 illustrates an example of a spectral decomposition;
Fig. 6 illustrates an example of the result of a spectral matching;
Fig. 7 an example of a spectral decomposition; and
Fig. 8 illustrates an example of the result of a spectral matching.

### DETAILED DESCRIPTION OF THE EMBODIMENTS

Like numbered elements in these figures are either equivalent elements or perform the same function. Elements which have been discussed previously will not necessarily be discussed in later figures if the function is equivalent.

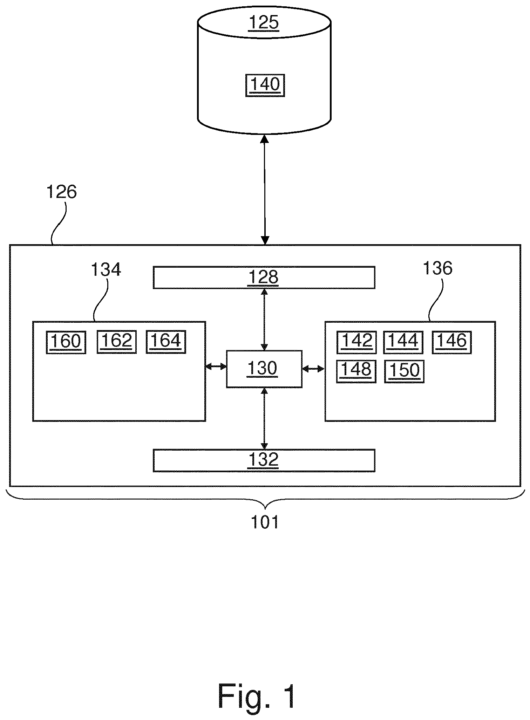

Fig. 1 shows an example of a medical image data processing system 101 comprising a computer 126. The computer 126 is shown as containing a processor 130 which is operable for executing machine-readable instructions. The computer 126 is further shown as comprising a user interface 132, computer storage 134 and computer memory 136 which are all accessible and connected to the processor 130. Furthermore, the computer 126 may communicatively be connected with a database 125. The computer 126 may be configured for requesting data, like medical image data 140 from the database 125 via the communication interface 128. According to embodiments, the database 125 may be provided by an external system and accessible for the computer 126 via a communication network using a communication connection. The communication connection may be established wireless or via a wire. According to embodiments the database 125 may be comprised by the computer 126 itself. For example, the database 125 may be comprised by the computer storage 134. According to further embodiments, the database 125 may be provided by a computer-readable storage medium. The database 125 contains imaging data 140. According to alternative embodiments, the computer storage 134 may provide the medical image data 140.

The computer 126 may be configured as a medical image data processing system 101. The computer memory 136 is shown as containing a control module 142. The control module 142 contains computer, i.e. machine, executable code or instructions which enable the processor 130 to control the operation and function of the medical image data processing system 101. The computer system 126 is e.g. controlled by the control module 142 to receive medical image data 140 for processing. The processing may comprise image segmentation, generating a surface mesh, comparing the generated surface mesh with a reference surface mesh and provide an area of topological mismatch of the two meshes.

For the processing of the medical image data 140, the computer memory 136 may further contain a segmentation module 144. The segmentation module 144 contains computer executable code or instructions which enable the processor 130 to perform a segmentation of the medical image data 140. The result of the segmentation 160 comprises segmented medical image data which e.g. is stored in the computer storage 134.

The computer memory 136 may further contain a surface mesh reconstruction module 146. The surface mesh reconstruction module 146 contains computer executable code or instructions which enable the processor 130 to convert the segmentation of the medical image data 140, e.g. provided in form of the segmentation result 160, into a surface mesh representation of an anatomical structure of interest. The resulting surface mesh representation 162 may e.g. be stored in the computer storage 134.

The computer memory 136 may further contain a spectral matching module 150. The spectral matching module 150 contains computer executable code or instructions which enable the processor 130 perform a spectral matching comparing the surface mesh representation 162 with a reference surface mesh representation of an anatomical reference structure. The spectral matching may identify and provide one or more areas of topological mismatch of the surface mesh representation with the reference surface mesh representation. This result 164 of the spectral matching may e.g. be stored in the computer storage 134.

The mismatch may e.g. indicate a medical abnormality, like e.g. an incision hole, or an error in the segmentation, like a leakage into an adjacent anatomical structure.

The reference surface mesh representation of an anatomical reference structure used for the spectral matching may e.g. be received from the database 125, from the computer storage 134 or from a memory device communicatively connected with the computer system 126. According to embodiments, the reference surface mesh representation may be generated by the computer 126 using medical reference data, the segmentation module 144 and the surface mesh reconstruction module 146.

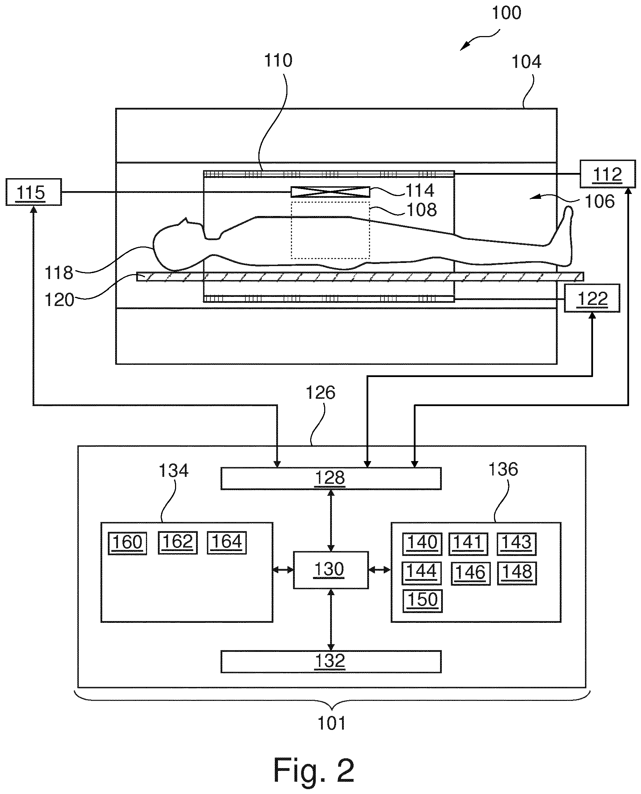

Fig. 2 shows an example of a medical image data processing system 101 comprising a magnetic resonance imaging system 100 with a magnet 104. The main magnet 104 is a superconducting cylindrical type magnet 104 with a bore 106 through it. The use of different types of magnets is also possible. For instance, it is also possible to use both a split cylindrical magnet and a so called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject: the arrangement of the two sections area similar to that of a Helmholtz coil. Open magnets are popular, because the subject is less confined. Inside the cryostat of the cylindrical magnet there is a collection of superconducting coils. Within the bore 106 of the cylindrical magnet 104 there is an imaging zone 108 where the magnetic field is strong and uniform enough to perform magnetic resonance imaging.

Within the bore 106 of the magnet there is also a set of magnetic field gradient coils 110 forming a magnetic field gradient system which is used for acquisition of magnetic resonance data to spatially encode magnetic spins within the imaging zone 108 of the magnet 104. The magnetic field gradient coils 110 connected to a magnetic field gradient coil power supply 112. The magnetic field gradient coils 110 are intended to be representative. Typically, magnetic field gradient coils 110 contain three separate sets of coils for spatially encoding in three orthogonal spatial directions. A magnetic field gradient power supply supplies current to the magnetic field gradient coils. The current supplied to the magnetic field gradient coils 110 is controlled as a function of time and may be ramped or pulsed.

Adjacent to the imaging zone 108 is a radio-frequency coil 114, also referred to as radio-frequency antenna system, for manipulating the orientations of magnetic spins within the imaging zone 108 and for receiving radio transmissions from spins also within the imaging zone 108. The radio frequency coil 114 may contain multiple coil elements. The radio-frequency coil 114 is connected to a radio frequency transceiver 115. The radio-frequency coil 114 and radio frequency transceiver 115 may be replaced by separate transmit and receive coils and a separate transmitter and receiver. It is understood that the radio-frequency coil 114 and the radio frequency transceiver 115 are representative. The radio-frequency coil 114 is intended to also represent a dedicated transmit antenna and a dedicated receive antenna. Likewise, the transceiver 115 may also represent a separate transmitter and receivers. The radio-frequency coil 114 may also have multiple receive/transmit elements and the radio frequency transceiver 115 may have multiple receive/transmit channels.

The subject support 120 is attached to an optional actuator 122 that is able to move the subject support and the subject 118 through the imaging zone 108. In this way, a larger portion of the subject 118 or the entire subject 118 can be imaged. The transceiver 115, the magnetic field gradient coil power supply 112 and the actuator 122 are shown as being connected to a hardware interface 128 of computer system 126 which is also comprised by the medical image data processing system 101.

The computer 126 is further shown as containing a processor 130 which is operable for executing machine-readable instructions. The computer 126 is further shown as comprising a user interface 132, computer storage 134 and computer memory 136 which are all accessible and connected to the processor 130.

The computer memory 136 may also comprise a control module 143. The control module 152 may contain computer executable code or instructions, which enable the processor 130 to control the operation of the computer 126 as well as the magnetic resonance imaging system 100.

The computer memory 136 may contain one or more pulse sequences 141. The pulse sequences 141 are either instructions or data which can be converted into instructions which enable the processor 130 to acquire magnetic resonance data 140 using the magnetic resonance imaging system 100. For instance, the control module 143 may work in conjunction with the pulse sequences 141 to acquire the magnetic resonance imaging data 140.

The computer 126 may further be configured as a magnetic resonance imaging data processing system. For instance, the control module 143 may e.g. be configured to control the operation and function of the medical image data processing system 101. The computer system 126 is e.g. controlled by the control module 143 to process the medical image data 140, which may comprise reconstructing magnetic resonance images. These magnetic resonance images may be used as the medical image data 140 for the further data processing. The processing may further comprise image segmentation, generating a surface mesh, comparing the generated surface mesh with a reference surface mesh and provide an area of topological mismatch of the two meshes.

For the processing of the medical image data 140, the computer memory 136 may further contain a segmentation module 144. The segmentation module 144 contains computer executable code or instructions which enable the processor 130 to perform a segmentation of the medical image data 140. The result of the segmentation 160 comprises segmented medical image data which e.g. is stored in the computer storage 134.

The computer memory 136 may further contain a surface mesh reconstruction module 146. The surface mesh reconstruction module 146 contains computer executable code or instructions which enable the processor 130 to convert the segmentation of the medical image data 140, e.g. provided in form of the segmentation result 160, into a surface mesh representation of an anatomical structure of interest. The resulting surface mesh representation 162 may e.g. be stored in the computer storage 134.

The computer memory 136 may further contain a spectral matching module 150. The spectral matching module 150 contains computer executable code or instructions which enable the processor 130 perform a spectral matching comparing the surface mesh representation 162 with a reference surface mesh representation of an anatomical reference structure. The spectral matching identifies and provides one or more areas of topological mismatch of the surface mesh representation with the reference surface mesh representation. This result 164 of the spectral matching may e.g. be stored in the computer storage 134.

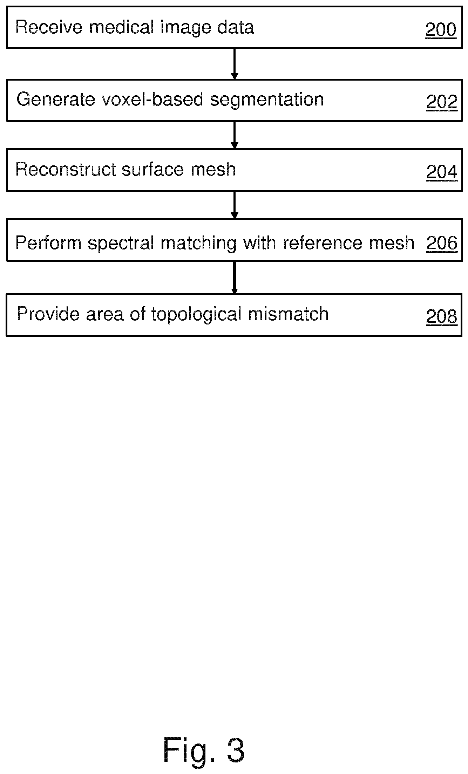

Fig. 3 shows a schematic flowchart which illustrates a method of operating the medical image processing system of Fig. 1. In step 200, medical image data is received. The medical image data may e.g. be received from a local or a remote storage device. The received medical image data may for example be three-dimensional image data provided in form of a stack of two dimensional medical images. In step 202, a segmentation of an anatomical structure of interest which is comprised by the medical image data is generated. The segmentation may e.g. indicate the contours of the anatomical structure of interest. The segmentation may e.g. be a volumetric voxel-by-voxel-segmentation. In step 204, the segmentation is converted to a triangulated surface mesh representation of the structure of interest. The surface mesh may represent surfaces of the anatomical structure of interest. In step 206, a spectral matching of the surface mesh representation of the segmentation with a reference surface mesh representation of the same anatomical reference structure is performed. In step 208, an area of topological mismatch of the surface mesh representation with the reference surface mesh representation is provided. The area of topological mismatch results after using spectral matching which identified areas of topological mismatch between the meshes compared.

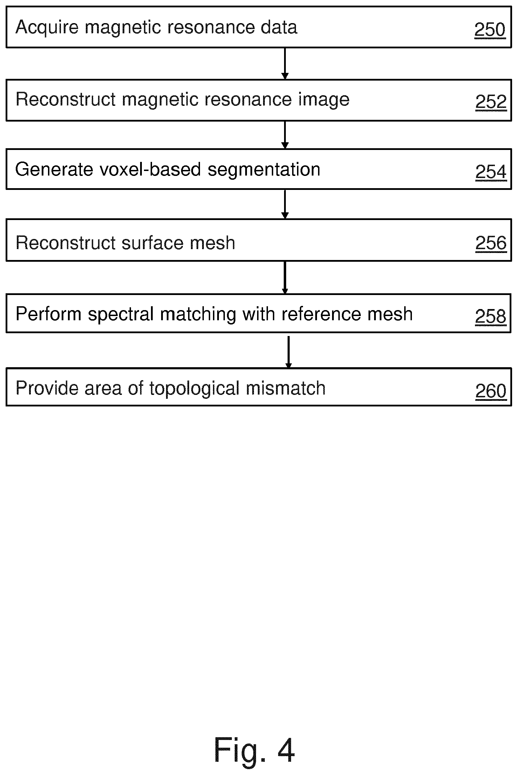

Fig. 4 shows a schematic flowchart which illustrates a method of operating the medical image processing system and the magnetic resonance imaging system of Fig. 2. In step 250, magnetic resonance data is acquired using the magnetic resonance imaging system. In step 252, magnetic resonance images of an anatomical structure of interest are reconstructed using the acquired magnetic resonance data. Medical image data may thus be provided in form the reconstructed magnetic resonance images. Steps 254 to 260 may be identical with steps 202 to 208 of Fig. 3.

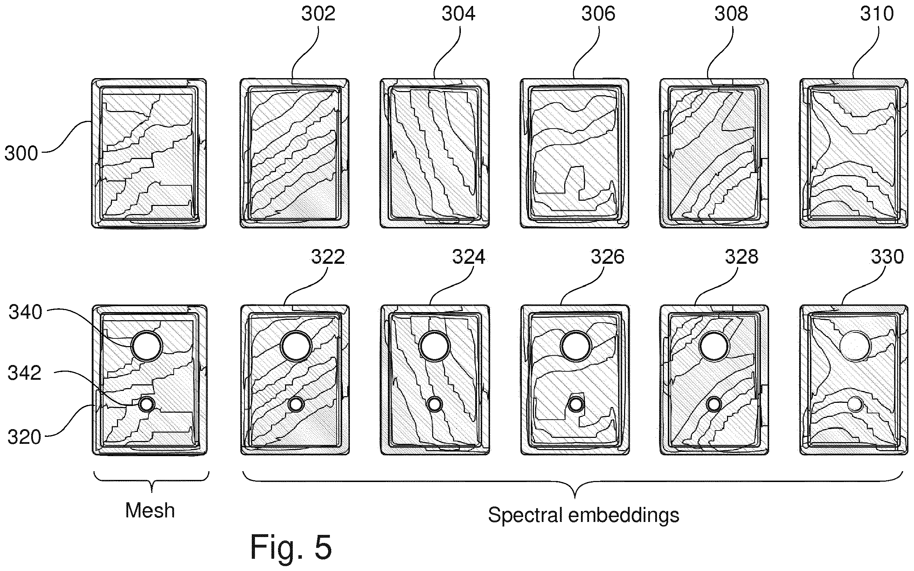

Fig. 5 shows an example of a mesh shape variation, when components, e.g. circular holes, are present in an exemplary model topology. In the top row, a first mesh 300 with its first five spectral embeddings 302-310 is shown. The spectral embeddings 302-310 are derived by a spectral decomposition. In the bottom row, a second mesh 340 which comprises two circular holes 340, 342 of different sizes as well as the first five spectral embeddings 322-330 of the respective mesh are shown. The spectral embeddings 340-342 are derived by a spectral decomposition. In can be seen that despite the topological differences of the two meshes 300, 320, their spectral embeddings 302-310; 322-330 show similar variation pattern apart from the holes, allowing for a correspondence between the meshes 300, 320 to be defined.

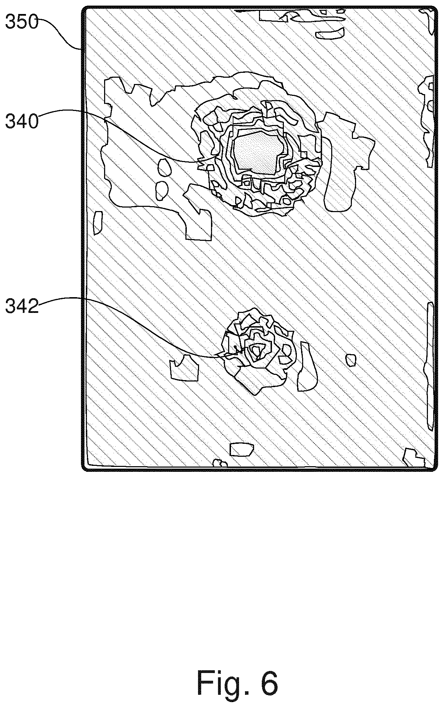

Fig. 6 shows an example 350 of a sum of absolute differences of the first five spectral embeddings 302-310; 322-330 at corresponding locations in the two meshes 300, 320 of Fig. 5. The two holes 340, 342 of the second mesh 320 are clearly detectable as shape abnormalities with respect to the first mesh 300 which does not contain any hole.

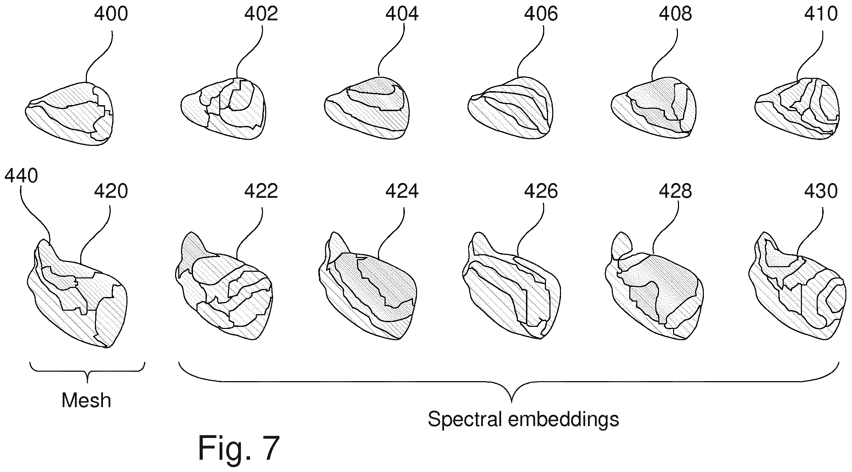

Fig. 7 shows an example of a mesh shape variation, when components are added to the topology with respect to a reference topology. In the top row, a reference mesh 400 of a bladder is shown with its first five spectral embeddings 402-410. The spectral embeddings 402-410 are derived by a spectral decomposition. In the bottom row a mesh 420 of a voxel-wise segmentation of a bladder from a medical image, like e.g. an MRI image, as well as its first five spectral embeddings 422-430 are shown. The spectral embeddings 422-430 are derived by a spectral decomposition. It may be seen that despite the topological differences of the meshes 400 420, their spectral embeddings 402-410; 422-430 show similar variation pattern apart from where segmentation did leak into the abdominal region, i.e. added components 440, allowing for a correspondence between the meshes 400 420 to be defined.

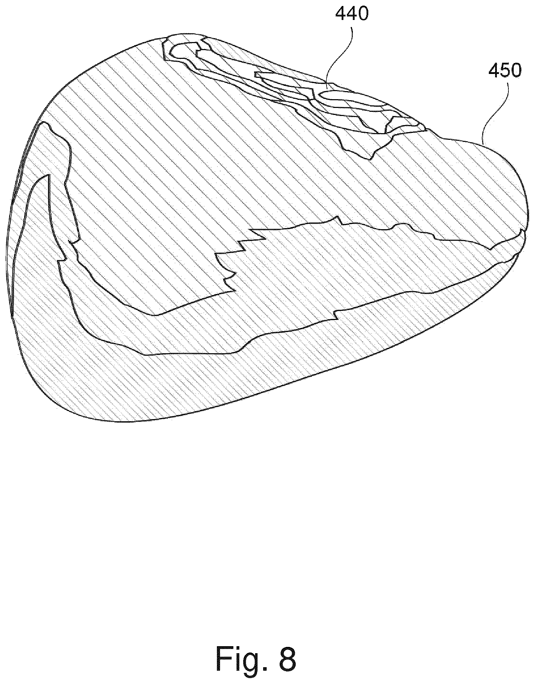

Fig. 8 shows an example of a sum 450 of absolute difference of the first five spectral embeddings 402-410; 422-430 at corresponding locations in the two meshes 400, 420. The error of the voxel-wise segmentation of the bladder, resulting in the additional component 440, may clearly be detected as a shape abnormality of the reconstructed mesh 420 compared to the reference mesh 400.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. The invention is defined by the appended claims.

### LIST OF REFERENCE NUMERALS

- 100: magnetic resonance imaging system
- 101: medical image data processing system
- 104: main magnet
- 106: bore of magnet
- 108: imaging zone
- 110: magnetic field gradient coil
- 112: magnetic field gradient coil power supply
- 114: radio-frequency coil
- 115: transceiver
- 118: subject
- 120: subject support
- 122: actuator
- 125: database
- 126: computer
- 128: hardware interface
- 130: processor
- 132: user interface
- 134: computer storage
- 136: computer memory
- 140: medical image data
- 141: pule sequence commands
- 142: control module
- 143: control module
- 144: segmentation module
- 146: surface mesh reconstruction module
- 148: reference surface mesh
- 150: spectral matching module
- 160: segmentation result
- 162: surface mesh
- 164: spectral matching result
- 300: reference surface mesh
- 302: first spectral embedding
- 304: second spectral embedding
- 306: third spectral embedding
- 308: fourth spectral embedding
- 310: fifth spectral embedding
- 320: surface mesh
- 322: first spectral embedding
- 324: second spectral embedding
- 326: third spectral embedding
- 328: fourth spectral embedding
- 330: fifth spectral embedding
- 340: hole
- 342: hole
- 350: sum of absolute differences
- 400: reference surface mesh
- 402: first spectral embedding
- 404: second spectral embedding
- 406: third spectral embedding
- 408: fourth spectral embedding
- 410: fifth spectral embedding
- 420: surface mesh
- 422: first spectral embedding
- 424: second spectral embedding
- 426: third spectral embedding
- 28: fourth spectral embedding
- 430: fifth spectral embedding
- 440: additional structure
- 450: sum of absolute differences

## Claims

1. A medical image data processing system (101) for image segmentation, the medical image data processing system (101) comprising
- a memory (136) storing machine executable instructions and a reference surface mesh representation of an anatomical reference structure,
- a processor (130) for controlling the medical image data processing system (101),
wherein execution of the machine executable instructions by the processor (130) causes the processor (130) to control the image data processing system (101) to:
- receive medical image data (140), wherein the received medical image data (140) is three-dimensional medical image data (140) and wherein the segmentation is a volumetric voxel-by-voxel-segmentation,
- generate a segmentation of an anatomical structure of interest comprised by the medical image data (140),
- convert the segmentation to a surface mesh representation of the anatomical structure of interest,
- compare the surface mesh representation with the reference surface mesh representation of the anatomical reference structure using spectral matching based on spectral graph theory, wherein one or more spectral embeddings of the two meshes are matched,
- providing an area of topological mismatch of the surface mesh representation with the reference surface mesh representation, wherein the area of topological mismatch is determined based on one or more of the matched spectral embeddings, wherein the providing of areas of topological mismatch comprises at least one of the following: identifying a missing structural section of the surface mesh representation with respect to the reference surface mesh representation and identifying an additional structural section of the surface mesh representation with respect to the reference surface mesh representation.

2. The medical image data processing system (101) of claim 1, wherein the providing of areas of topological mismatch comprises identifying at least one of the following: an incision hole and a tissue resection comprised by the anatomical structure of interest.

3. The medical image data processing system (101) of any of the previous claims, wherein the execution of the machine executable instructions further causes the processor (130) to determine a quality metric of the segmentation based on the comparison.

4. The medical image data processing system (101) of any of the previous claims, wherein the receiving of the medical image data (140) comprises: sending a request for the respective medical image data (140) to a database (125) comprising the medical image data (140), wherein in response to the request the requested medical image data (140) is received from the database (125).

5. The medical image data processing system (101) of any of the previous claims, wherein the medical image data (140) comprises at least one of the following: magnetic resonance image data, pseudo computer tomography image data and computer tomography image data.

6. The medical image data processing system (101) of claim 5, wherein the medical image data processing system (101) further comprises a magnetic resonance imaging system (100) and wherein the magnetic resonance imaging system (100) comprises:
- a main magnet (104) for generating a main magnetic field within an imaging zone (108),
- a magnetic field gradient system (110) for generating a spatially dependent gradient magnetic field within the imaging zone (108),
- a radio-frequency antenna system (114) configured for acquiring magnetic resonance data from the imaging zone (108),
wherein the memory (136) further stores pulse sequence commands (141), wherein the pulse sequence commands (141) are configured for controlling the magnetic resonance imaging system (100) to acquire the magnetic resonance data from the imaging zone (108),
wherein the receiving of the medical image data (140) comprises the execution of the machine executable instructions using the pulse sequence commands (141) and acquire the medical image data (140) in form of magnetic resonance image data from the imaging zone (108) by the radio-frequency antenna system (114).

7. The medical image data processing system (101) of any of the previous claims, wherein the anatomical reference structure is an exemplary anatomical structure and the execution of the machine executable instructions further causes the processor (130) to generate the reference surface mesh representation, wherein the generating comprises:
- receiving reference medical image data (140) of the exemplary anatomical structure,
- generate a segmentation of the exemplary anatomical structure,
- convert the segmentation to the reference surface mesh representation of the exemplary anatomical structure.

8. The medical image data processing system (101) of claim 7, wherein the received reference medical image data (140) comprises a plurality of sets of medical reference image data of a plurality of exemplary anatomical structures, wherein a segmentation is generated for each of the sets of medical reference image data, wherein the resulting segmentations are converted to exemplary surface mesh representations of the exemplary anatomical structures, and wherein the reference surface mesh representation is generated by averaging over the exemplary surface mesh representations.

9. A method for image segmentation using a medical image data processing system (101), the medical image data processing system (101) comprising:
- a memory (136) storing machine executable instructions and reference surface mesh representation of an anatomical reference structure,
- a processor (130) for controlling the medical image data processing system (101), wherein execution of the machine executable instructions by the processor (130) causes the processor (130) to control the image data processing system (101) to execute the method comprising:
- receiving medical image data (140), wherein the received medical image data (140) is three-dimensional medical image data (140) and wherein the segmentation is a volumetric voxel-by-voxel-segmentation,
- generating a segmentation of an anatomical structure of interest comprised by the medical image data (140),
- converting the segmentation to a surface mesh representation of the anatomical structure of interest,
- comparing the surface mesh representation with the reference surface mesh representation of the anatomical reference structure using spectral matching based on spectral graph theory, wherein one or more spectral embeddings of the two meshes are matched,
- providing an area of topological mismatch of the surface mesh representation with the reference surface mesh representation, wherein the area of topological mismatch is determined based on one or more of the matched spectral embeddings, wherein the providing of areas of topological mismatch comprises at least one of the following: identifying a missing structural section of the surface mesh representation with respect to the reference surface mesh representation and identifying an additional structural section of the surface mesh representation with respect to the reference surface mesh representation.

10. The method of claim 9, wherein the medical image data processing system (101) further comprises a magnetic resonance imaging system (100) and wherein the magnetic resonance imaging system (100) comprises:
- a main magnet (104) for generating a main magnetic field within an imaging zone (108),
- a magnetic field gradient system (110) for generating a spatially dependent gradient magnetic field within the imaging zone (108),
- a radio-frequency antenna system (114) configured for acquiring magnetic resonance data from the imaging zone (108),
wherein the memory (136) further stores pulse sequence commands (141), wherein the pulse sequence commands (141) are configured for controlling the magnetic resonance imaging system (100) to acquire the magnetic resonance data from the imaging zone (108),
wherein the receiving of the medical image data (140) comprises the execution of the machine executable instructions using the pulse sequence commands (141) and acquire the medical image data (140) in form of magnetic resonance image data from the imaging zone (108) by the radio-frequency antenna system (114).

11. A computer program product for image segmentation comprising machine executable instructions for execution by a processor (130) controlling a medical image data processing system (101), wherein the medical image data processing system (101) comprises a processor (130) for controlling the medical image data processing system (101), wherein execution of the machine executable instructions by the processor (130) causes the processor (130) to control the medical image data processing system (101) to:
- receive medical image data (140), wherein the received medical image data (140) is three-dimensional medical image data (140) and wherein the segmentation is a volumetric voxel-by-voxel-segmentation,
- generate a segmentation of an anatomical structure of interest comprised by the medical image data (140),
- convert the segmentation to a surface mesh representation of the anatomical structure of interest,
- compare the surface mesh representation with the reference surface mesh representation of the anatomical reference structure using spectral matching based on spectral graph theory, wherein one or more spectral embeddings of the two meshes are matched,
- provide an area of topological mismatch of the surface mesh representation with the reference surface mesh representation, wherein the area of topological mismatch is determined based on one or more of the matched spectral embeddings, wherein the providing of areas of topological mismatch comprises at least one of the following: identifying a missing structural section of the surface mesh representation with respect to the reference surface mesh representation and identifying an additional structural section of the surface mesh representation with respect to the reference surface mesh representation.

## Patentansprüche

1. Medizinisches Bilddatenverarbeitungssystem (101) zur Bildsegmentierung, wobei das medizinische Bilddatenverarbeitungssystem (101) Folgendes umfasst
- einen Speicher (136), der maschinenausführbare Befehle und eine Referenzflächennetzdarstellung einer anatomischen Referenzstruktur speichert,
- einen Prozessor (130) zur Steuerung des medizinischen Bilddatenverarbeitungssystems (101),
wobei die Ausführung der maschinenausführbaren Anweisungen durch den Prozessor (130)
Den Prozessor (130) veranlasst, das Bilddatenverarbeitungssystem (101) zu steuern, um:
- medizinische Bilddaten (140) zu empfangen, wobei die empfangenen medizinischen Bilddaten (140) dreidimensionale medizinische Bilddaten (140) sind und wobei die Segmentierung eine volumetrische Voxel-by-Voxel-Segmentierung ist,
- Generierung einer Segmentierung einer anatomischen betreffenden Struktur, die aus den medizinischen Bilddaten (140) besteht,
- Umwandlung der Segmentierung in eine Oberflächennetzdarstellung der
betreffenden anatomischen Struktur um,
- die Darstellung des Oberflächennetzes mit der Darstellung des Referenz-Oberflächennetzes der anatomischen Referenzstruktur unter Verwendung eines spektralen Abgleichs auf der Grundlage der Spektralgraphen-Theorie zu vergleichen, wobei eine oder mehrere spektrale Einbettungen der beiden Netze abgeglichen werden,
- einen Bereich der topologischen Fehlanpassung der Oberflächennetzdarstellung mit der Referenzoberflächennetzdarstellung bereitzustellen, wobei der Bereich der topologischen Fehlanpassung auf der Grundlage einer oder mehrerer der angepassten spektralen Einbettungen bestimmt wird, wobei das Bereitstellen von Bereichen der topologischen Fehlanpassung mindestens eines des Folgenden umfasst: Identifizierung eines fehlenden Strukturabschnitts der Oberflächennetzdarstellung in Bezug auf die Referenzoberflächennetzdarstellung und Identifizierung eines zusätzlichen Strukturabschnitts der Oberflächennetzdarstellung in Bezug auf die Referenzoberflächennetzdarstellung.

2. Medizinisches Bilddatenverarbeitungssystem (101) nach Anspruch 1, wobei das Bereitstellen von Bereichen mit topologischer Fehlanpassung das Identifizieren von mindestens eines der folgenden Punkte umfasst: ein Einschnittloch und eine Geweberesektion, die von der betreffenden anatomischen Struktur umfasst.

3. Medizinisches Bilddatenverarbeitungssystem (101) nach einem der vorhergehenden Ansprüche, wobei die Ausführung der maschinenausführbaren Anweisungen darüber hinaus den Prozessor (130) veranlasst, eine Qualitätsmetrik der Segmentierung basierend auf dem Vergleich zu bestimmen.

4. Medizinisches Bilddatenverarbeitungssystem (101) nach einem der vorhergehenden Ansprüche, wobei das Empfangen der medizinischen Bilddaten (140) Folgendes umfasst:
Senden einer Anforderung für die jeweiligen medizinischen Bilddaten (140) an eine Datenbank (125), die die medizinischen Bilddaten (140) umfasst, wobei als Reaktion auf die Anforderung die angeforderten medizinischen Bilddaten (140) von der Datenbank (125) empfangen werden.

5. Medizinisches Bilddatenverarbeitungssystem (101) nach einem der vorhergehenden Ansprüche, wobei die medizinischen Bilddaten (140) mindestens eines der folgenden Punkte umfassen: Magnetresonanzbilddaten, Pseudo-Computertomographie-Bilddaten und Computertomographie-Bilddaten.

6. Medizinisches Bilddatenverarbeitungssystem (101) nach Anspruch 5, wobei das medizinische Bilddatenverarbeitungssystem (101) darüber hinaus ein Magnetresonanz-Bildgebungssystem (100) umfasst und wobei das Magnetresonanz-Bildgebungssystem (100) Folgendes umfasst:
- einen Hauptmagneten (104) zur Erzeugung eines Hauptmagnetfeldes innerhalb einer
Bildgebungszone (108),
- ein Magnetfeldgradientensystem (110) zur Erzeugung eines räumlich abhängigen Gradientenmagnetfeldes innerhalb der Bildgebungszone (108),
- ein Hochfrequenz-Antennensystem (114), das für die Erfassung von Magnetresonanzdaten aus der Bildgebungszone (108) konfiguriert ist,
wobei der Speicher (136) des Weiteren Pulssequenzbefehle (141) speichert, wobei die Pulssequenzbefehle (141) zum Steuern des Magnetresonanz-Bildgebungssystems (100) konfiguriert sind, um die Magnetresonanzdaten von der Bildgebungszone (108) zu erfassen,
wobei der Empfang der medizinischen Bilddaten (140) die Ausführung der maschinenausführbaren Befehle unter Verwendung der Impulsfolgenbefehle (141) umfasst und die medizinischen Bilddaten (140) in Form von Magnetresonanzbilddaten aus der Bildgebungszone (108) durch das Hochfrequenzantennensystem (114) erfasst werden.

7. Medizinisches Bilddatenverarbeitungssystem (101) nach einem der vorhergehenden Ansprüche, wobei die anatomische Referenzstruktur eine beispielhafte anatomische Struktur ist und die Ausführung der maschinenausführbaren Anweisungen des Weiteren den Prozessor (130) veranlasst, die Referenzoberflächennetzdarstellung zu erzeugen, wobei das Erzeugen Folgendes umfasst:
- Empfang von medizinischen Referenzbilddaten (140) der beispielhaften anatomischen Struktur,
- eine Segmentierung der beispielhaften anatomischen Struktur erzeugen,
- die Segmentierung in die Referenzflächennetzdarstellung der beispielhaften anatomischen Struktur umwandeln.

8. Medizinisches Bilddatenverarbeitungssystem (101) nach Anspruch 7, wobei die empfangenen medizinischen Referenzbilddaten (140) eine Vielzahl von Sätzen medizinischer Referenzbilddaten einer Vielzahl von beispielhaften anatomischen Strukturen umfassen,
wobei eine Segmentierung für jeden der Sätze medizinischer Referenzbilddaten erzeugt wird, wobei die resultierenden Segmentierungen in beispielhafte Oberflächennetzdarstellungen
der beispielhaften anatomischen Strukturen umgewandelt werden, und wobei die Referenz-Oberflächennetzdarstellung Referenz-Oberflächennetzdarstellung durch Mittelwertbildung über die beispielhaften Oberflächennetzdarstellungen erzeugt wird.

9. Verfahren zur Bildsegmentierung unter Verwendung eines medizinischen Bilddatenverarbeitungssystems (101), wobei das medizinische Bilddatenverarbeitungssystem (101) Folgendes umfasst:
- einen Speicher (136), der maschinenausführbare Befehle und eine Referenzoberflächennetzdarstellung einer anatomischen Referenzstruktur speichert,
- einen Prozessor (130) zum Steuern des medizinischen Bilddatenverarbeitungssystems (101), wobei die Ausführung der maschinenausführbaren Anweisungen durch den Prozessor (130) den Prozessor (130) veranlasst, das Bilddatenverarbeitungssystem (101) zu steuern, um das Verfahren auszuführen, das Folgendes umfasst:
- Empfangen von medizinischen Bilddaten (140), wobei die empfangenen medizinischen Bilddaten (140) dreidimensionale medizinische Bilddaten (140) sind und wobei die Segmentierung eine volumetrische Voxel-by-Voxel-Segmentierung ist,
- Erzeugen einer Segmentierung einer betreffenden anatomischen Struktur, die aus den medizinischen Bilddaten (140) besteht,
- Umwandlung der Segmentierung in eine Oberflächennetzdarstellung der betreffenden anatomischen Struktur um,
- die Oberflächennetzdarstellung mit der Referenzoberflächennetzdarstellung der anatomischen Referenzstruktur unter Verwendung von Spektralanpassung auf der Grundlage der Spektralgraphen-Theorie zu vergleichen, wobei eine oder mehrere spektrale Einbettungen der beiden Netze
abgeglichen werden,
- einen Bereichs der topologischen Fehlanpassung der Oberflächennetzdarstellung
bereitzustellen, wobei der Bereich der topologischen Fehlanpassung auf der Grundlage einer oder mehrerer der angepassten spektralen Einbettungen bestimmt wird, wobei das Bereitstellen von Bereichen der topologischen Fehlanpassung mindestens eines der folgenden Punkte umfasst:
Identifizierung eines fehlenden Strukturabschnitts der Oberflächennetzdarstellung in Bezug auf die Referenzoberflächennetzdarstellung und Identifizierung eines zusätzlichen Strukturabschnitts der Oberflächennetzdarstellung in Bezug auf die Referenzoberflächennetzdarstellung.

10. Verfahren nach Anspruch 9, wobei das medizinische Bilddatenverarbeitungssystem (101) darüber hinaus ein Magnetresonanz-Bildgebungssystem (100) umfasst und wobei das Magnetresonanz-Bildgebungssystem (100) Folgendes umfasst:
- einen Hauptmagneten (104) zur Erzeugung eines Hauptmagnetfeldes in einer
Bildgebungszone (108),
- ein Magnetfeldgradientensystem (110) zur Erzeugung eines räumlich abhängigen Gradientenmagnetfeldes innerhalb der Bildgebungszone (108),
- ein Hochfrequenz-Antennensystem (114), das für die Erfassung von Magnetresonanzdaten aus der Bildgebungszone (108) konfiguriert ist,
wobei der Speicher (136) des Weiteren Pulssequenzbefehle (141) speichert, wobei die Pulssequenzbefehle (141) zum Steuern des Magnetresonanz-Bildgebungssystems (100) konfiguriert sind, um die Magnetresonanzdaten von der Bildgebungszone (108) zu erhalten,
wobei der Empfang der medizinischen Bilddaten (140) die Ausführung der maschinenausführbaren Befehle unter Verwendung der Impulsfolgenbefehle (141) umfasst und die medizinischen Bilddaten (140) in Form von Magnetresonanzbilddaten aus der Bildgebungszone (108) durch das Hochfrequenzantennensystem (114) erfasst werden.

11. Computerprogrammprodukt zur Bildsegmentierung, das maschinenausführbare Befehle zur Ausführung durch einen Prozessor (130) umfasst, der ein medizinisches Bilddatenverarbeitungssystem (101) steuert, wobei das medizinische Bilddatenverarbeitungssystem (101) einen Prozessor (130) zur Steuerung des medizinischen Bilddatenverarbeitungssystems (101) umfasst, wobei die Ausführung der maschinenausführbaren Befehle durch den Prozessor (130) den Prozessor (130) veranlasst, das medizinische Bilddatenverarbeitungssystem (101) zu steuern, um:
- medizinische Bilddaten (140) zu empfangen, wobei die empfangenen medizinischen Bilddaten (140) dreidimensionale medizinische Bilddaten (140) sind und wobei die Segmentierung eine volumetrische Voxel-by-Voxel-Segmentierung ist,
- eine Segmentierung einer betreffenden anatomischen Struktur zu erzeugen, die von den medizinischen Bilddaten (140) umfasst wird,
- Umwandlung der Segmentierung in eine Oberflächennetzdarstellung der betreffenden anatomischen Struktur von Interesse,
- die Darstellung des Oberflächennetzes mit der Darstellung des Referenz-Oberflächennetzes der anatomischen Referenzstruktur unter Verwendung eines spektralen Abgleichs auf der Grundlage der Spektralgraphen-Theorie zu vergleichen, wobei eine oder mehrere spektrale Einbettungen der beiden Netze abgeglichen werden,
- Bereitstellen eines Bereichs der topologischen Fehlanpassung der Oberflächennetzdarstellung mit der Referenzoberflächennetzdarstellung, wobei der Bereich der topologischen Fehlanpassung auf der Grundlage einer oder mehrerer der angepassten spektralen Einbettungen bestimmt wird, wobei das Bereitstellen von Bereichen der topologischen Fehlanpassung mindestens eines der folgenden Punkte umfasst: Identifizieren eines fehlenden strukturellen Abschnitts der Oberflächennetzdarstellung in Bezug auf die Referenzoberflächennetzdarstellung und Identifizieren eines zusätzlichen strukturellen Abschnitts der Oberflächennetzdarstellung in Bezug auf die Referenzoberflächennetzdarstellung.

## Revendications

1. Système de traitement de données d'image médicale (101) pour la segmentation d'image, le système de traitement de données d'image médicale (101) comprenant
- une mémoire (136) stockant des instructions exécutables par machine et une représentation de maillage de surface de référence d'une structure de référence anatomique,
- un processeur (130) pour commander le système de traitement de données d'image médicale (101),
dans lequel l'exécution des instructions exécutables par la machine par le processeur (130) amène le processeur (130) à commander le système de traitement de données d'image (101) pour:
- recevoir des données d'image médicale (140), dans lequel les données d'image médicale reçues (140) sont des données d'image médicale tridimensionnelles (140) et dans lequel la segmentation est une segmentation volumétrique voxel par voxel,
- générer une segmentation d'une structure anatomique d'intérêt comprise dans les données d'image médicale (140),
- convertir la segmentation en une représentation de maillage de surface de la structure anatomique d'intérêt,
- comparer la représentation de maillage de surface avec la représentation de maillage de surface de référence de la structure de référence anatomique en utilisant un appariement spectrale basée sur la théorie spectrale des graphes, dans laquelle un ou plusieurs enregistrements spectraux des deux maillages sont appariés,
- fournir une zone de désadaptation topologique de la représentation de maillage de surface avec la représentation de maillage de surface de référence, dans lequel la zone de désadaptation topologique est déterminée sur la base d'un ou plusieurs des enregistrements spectraux appariés, dans lequel la fourniture de zones de désadaptation topologique comprend au moins l'un des éléments suivants: identifier une section structurelle manquante de la représentation de maillage de surface par rapport à la représentation de maillage de surface de référence et identifier une section structurelle supplémentaire de la représentation de maillage de surface par rapport à la représentation de maillage de surface de référence.

2. Système de traitement de données d'image médicale (101) selon la revendication 1, dans lequel la fourniture de zones de désadaptation topologique comprend l'identification d'au moins l'un des éléments suivants: un trou d'incision et une résection de tissu compris dans la structure anatomique d'intérêt.

3. Système de traitement de données d'image médicale (101) selon l'une quelconque des revendications précédentes, dans lequel l'exécution des instructions exécutables par machine amène en outre le processeur (130) à déterminer une métrique de qualité de la segmentation sur la base de la comparaison.

4. Système de traitement de données d'image médicale (101) selon l'une quelconque des revendications précédentes, dans lequel la réception des données d'image médicale (140) comprend: l'envoi d'une demande pour les données d'image médicale respectives (140) à une base de données (125) comprenant les données d'image médicale (140), dans lequel en réponse à la demande, les données d'image médicale demandées (140) sont reçues de la base de données (125).

5. Système de traitement de données d'images médicales (101) selon l'une quelconque des revendications précédentes, dans lequel les données d'images médicales (140) comprennent au moins l'un des éléments suivants: données d'images de résonance magnétique, données d'images de pseudo-tomographie par ordinateur et données d'images de tomographie par ordinateur.

6. Système de traitement de données d'images médicales (101) selon la revendication 5, dans lequel le système de traitement de données d'images médicales (101) comprend en outre un système d'imagerie par résonance magnétique (100) et dans lequel le système d'imagerie par résonance magnétique (100) comprend:
- un aimant principal (104) pour générer un champ magnétique principal à l'intérieur d'une zone d'imagerie (108),
- un système de gradient de champ magnétique (110) pour générer un champ magnétique à gradient dépendant de l'espace dans la zone d'imagerie (108),
- un système d'antenne radiofréquence (114) configuré pour acquérir des données de résonance magnétique à partir de la zone d'imagerie (108),
dans lequel la mémoire (136) stocke en outre des commandes de séquence d'impulsions (141), dans lequel les commandes de séquence d'impulsions (141) sont configurées pour commander le système d'imagerie par résonance magnétique (100) pour acquérir les données de résonance magnétique à partir de la zone d'imagerie (108), dans lequel la réception des données d'image médicale (140) comprend l'exécution des instructions exécutables par la machine en utilisant les commandes de séquence d'impulsions (141) et acquérir les données d'image médicale (140) sous la forme de données d'image de résonance magnétique à partir de la zone d'imagerie (108) par le système d'antenne à radiofréquence (114).

7. Système de traitement de données d'images médicales (101) selon l'une quelconque des revendications précédentes, dans lequel la structure de référence anatomique est une structure anatomique exemplaire et l'exécution des instructions exécutables par la machine amène en outre le processeur (130) à générer la représentation de maillage de surface de référence, dans lequel la génération comprend:
- recevoir des données d'image médicale de référence (140) de la structure anatomique exemplaire,
- générer une segmentation de la structure anatomique exemplaire,
- convertir la segmentation en représentation de maillage de surface de référence de la structure anatomique exemplaire.

8. Système de traitement de données d'images médicales (101) selon la revendication 7, dans lequel les données d'images médicales de référence reçues (140) comprennent une pluralité d'ensembles de données d'images médicales de référence d'une pluralité de structures anatomiques exemplaires,
dans lequel une segmentation est générée pour chacun des ensembles de données d'image de référence médicale, dans lequel les segmentations résultantes sont converties en représentations de maillage de surface exemplaires des structures anatomiques exemplaires, et dans lequel la représentation de maillage de surface de référence est générée en faisant la moyenne des représentations de maillage de surface exemplaires.

9. Procédé de segmentation d'images utilisant un système de traitement de données d'images médicales (101), le système de traitement de données d'images médicales (101) comprenant:
- une mémoire (136) stockant des instructions exécutables par machine et une représentation de maillage de surface de référence d'une structure de référence anatomique,
- un processeur (130) pour commander le système de traitement de données d'image médicale (101), dans lequel l'exécution des instructions exécutables par machine par le processeur (130) amène le processeur (130) à commander le système de traitement de données d'image (101) pour exécuter le procédé comprenant:
- recevoir des données d'image médicale (140), dans lequel les données d'image médicale reçues (140) sont des données d'image médicale tridimensionnelles (140) et dans lequel la segmentation est une segmentation volumétrique voxel par voxel,
- générer une segmentation d'une structure anatomique d'intérêt comprise dans les données d'image médicale (140),
- convertir la segmentation en une représentation de maillage de surface de la structure anatomique d'intérêt,
- comparer la représentation de maillage de surface avec la représentation de maillage de surface de référence de la structure de référence anatomique en utilisant un appariement spectrale basée sur la théorie spectrale des graphes, dans laquelle un ou plusieurs enregistrements spectraux des deux maillages sont appariés,
- fournir une zone de désadaptation topologique de la représentation de maillage de surface avec la représentation de maillage de surface de référence, dans lequel la zone de désadaptation topologique est déterminée sur la base d'un ou plusieurs des enregistrements spectraux appariés, dans lequel la fourniture de zones de désadaptation topologique comprend au moins l'un des éléments suivants: identifier une section structurelle manquante de la représentation de maillage de surface par rapport à la représentation de maillage de surface de référence et identifier une section structurelle supplémentaire de la représentation de maillage de surface par rapport à la représentation de maillage de surface de référence.

10. Procédé selon la revendication 9, dans lequel le système de traitement de données d'images médicales (101) comprend en outre un système d'imagerie par résonance magnétique (100) et dans lequel le système d'imagerie par résonance magnétique (100) comprend:
- un aimant principal (104) pour générer un champ magnétique principal à l'intérieur d'une zone d'imagerie (108),
- un système de gradient de champ magnétique (110) pour générer un champ magnétique à gradient dépendant de l'espace dans la zone d'imagerie (108),
- un système d'antenne radiofréquence (114) configuré pour acquérir des données de résonance magnétique à partir de la zone d'imagerie (108),
dans lequel la mémoire (136) stocke en outre des commandes de séquence d'impulsions (141), dans lequel les commandes de séquence d'impulsions (141) sont configurées pour commander le système d'imagerie par résonance magnétique (100) pour acquérir les données de résonance magnétique à partir de la zone d'imagerie (108),
dans lequel la réception des données d'image médicale (140) comprend l'exécution des instructions exécutables par la machine en utilisant les commandes de séquence d'impulsions (141) et acquérir les données d'image médicale (140) sous la forme de données d'image de résonance magnétique à partir de la zone d'imagerie (108) par le système d'antenne à radiofréquence (114).

11. Produit de programme informatique pour la segmentation d'image comprenant des instructions exécutables par machine pour une exécution par un processeur (130) commandant un système de traitement de données d'image médicale (101), dans lequel le système de traitement de données d'image médicale (101) comprend un processeur (130) pour commander le système de traitement de données d'image médicale (101), dans lequel l'exécution des instructions exécutables par machine par le processeur (130) amène le processeur (130) à commander le système de traitement de données d'image médicale (101) pour:
- recevoir des données d'image médicale (140), dans lequel les données d'image médicale reçues (140) sont des données d'image médicale tridimensionnelles (140) et dans lequel la segmentation est une segmentation volumétrique voxel par voxel,
- générer une segmentation d'une structure anatomique d'intérêt comprise dans les données d'image médicale (140),
- convertir la segmentation en une représentation de maillage de surface de la structure anatomique d'intérêt,
- comparer la représentation de maillage de surface avec la représentation de maillage de surface de référence de la structure de référence anatomique en utilisant un appariement spectrale basée sur la théorie spectrale des graphes, dans laquelle un ou plusieurs enregistrements spectraux des deux maillages sont appariés,
- fournir une zone de désadaptation topologique de la représentation de maillage de surface avec la représentation de maillage de surface de référence, dans lequel la zone de désadaptation topologique est déterminée sur la base d'un ou plusieurs des enregistrements spectraux appariés, dans lequel la fourniture de zones de désadaptation topologique comprend au moins l'un des éléments suivants: identifier une section structurelle manquante de la représentation de maillage de surface par rapport à la représentation de maillage de surface de référence et identifier une section structurelle supplémentaire de la représentation de maillage de surface par rapport à la représentation de maillage de surface de référence.
